# FASCICULE DE BREVET EUROPEEN

(11) **EP 3 478 695 B1**
(45) Date de publication et mention de la délivrance du brevet: **25.11.2020**
(21) Numéro de dépôt: 17742823.2
(22) Date de dépôt: 29.06.2017
(51) Int. Cl.: C07F 7/08, C08K 5/5419, C08L 21/00, C08K 5/548

(54) **POLYSULFURE DE MONOHYDROXYSILANE**
MONOHYDROXYSILAN-POLYSULFID
MONOHYDROXYSILANE POLYSULFIDE

(30) Priorité: 30.06.2016 FR 1656269
(43) Date de publication de la demande: 08.05.2019
(73) Titulaire: Compagnie Générale des Etablissements Michelin, 63000 Clermont-Ferrand (FR)
(72) Inventeur: SEEBOTH, Nicolas, 63040 Clermont-Ferrand Cedex 9 (FR); SALIT, Anne-Frédérique, 63040 Clermont-Ferrand Cedex 9 (FR); ANTELO MIGUEZ, José Manuel, 15702 Santiago de Compostela (Coruna) (ES); BARREIRO, Pablo, 36202 Vigo (Galicia) (ES); JANEIRO, Benigno A., 36569 San-Miguel de Presqueiras (Forcarei) (ES)
(74) Mandataire: Bocchi, Brigitte
(86) Numéro de dépôt international: PCT/FR2017/051745
(87) Numéro de publication internationale: WO 2018/002534

(56) Documents cités:
- WO-A1-02/30939
- WO-A1-2010/133373

## Description

La présente invention se rapporte aux agents de couplage polyfonctionnels, utilisables notamment pour le couplage de charges inorganiques renforçantes et d'élastomères diéniques dans des compositions de caoutchouc destinées par exemple à la fabrication de pneumatiques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en œuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en œuvre des compositions de caoutchouc les contenant, mais cette mise en œuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

La demanderesse dans son brevet EP 1326871 a décrit de nouveaux agents de couplage hydroxysilanes susceptibles de pallier les inconvénients des agents de couplage mercaptosilanes tels que décrits dans les publications FR-A-2094859 ou GB-A-1310379, qui entraînent, pour les compositions les incluant, des problèmes de vulcanisation prématurée encore appelée "grillage" ("scorching"), et de viscosité à l'état cru excessive. Ces nouveaux agents de couplage hydroxysilanes permettent également de pallier les inconvénients des agents de couplage alkoxysilanes polysulfurés tels que décrits notamment dans les publications EP-A-1043357, WO00/53671 en particulier le TESPT (tétrasulfure de bis 3-triéthoxysilylpropyle) qui règlent les inconvénient précités, mais présentent toutefois l'inconvénient de ralentir de manière sensible la cinétique de vulcanisation des compositions de caoutchouc les contenant, par rapport à celle des compositions conventionnelles renforcées par du noir de carbone.

Le document WO02/30939 divulgue des polysulfures de monohydroxysilane et le document WO2010/133373 divulgue des polysulfures de dihydoxysilane.

La demanderesse a poursuivi ces recherches et après de nombreuses années de recherches, a découvert qu'une fonctionnalisation particulière de l'agent de couplage permettait de conserver les propriétés en composition de caoutchouc obtenues avec la première génération d'agents de couplage hydroxysilanes précités mais également, de façon surprenante, que ces nouveaux agents de couplage permettaient d'améliorer les propriétés de renforcement et de rigidité conférées à des compositions de caoutchouc les incluant.

L'invention a donc pour objet un polysulfure de monohydroxysilane, de formule (I):

(HO)(R¹)₂Si-CH₂-(R²)CH-Z-Sx-Z-HC(R²)-CH₂Si(R¹)₂(OH) (I)

dans laquelle :
- R¹, identiques ou différents, représentent chacun un groupe hydrocarboné monovalent ayant de 1 à 18 atomes de carbone ;
- R², identiques ou différents, représentent chacun un groupe hydrocarboné monovalent ayant de 1 à 4 atomes de carbone,
- Z, identiques ou différents, représentent chacun un groupe de liaison hydrocarboné divalent comportant de 1 à 16 atomes de carbone,
- x est un nombre entier ou fractionnaire supérieur ou égal à 2.

Avantageusement, les groupes R¹ sont choisis parmi les alkyles en C₁-C₆, les cycloalkyles en C₅-C₈ et le radical phényle; les groupes Z étant choisis parmi les alkylènes en C₁-C₁₆ et les arylènes en C₆-C₁₂, et plus préférentiellement les groupes R¹ sont choisis parmi les alkyles en C₁-C₃ et les groupes Z étant choisis parmi les alkylènes en C₁-C₃.

Selon un mode de réalisation préféré de l'invention, le polysulfure consiste en un polysulfure de bis(2-méthylpropane-1,3-diyl)(diméthylsilanol) de formule :

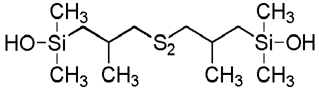

Selon un autre mode de réalisation préféré de l'invention, le polysulfure consiste en un polysulfure de bis(2-méthylpropane-1,3-diyl)(diméthylsilanol) de formule :

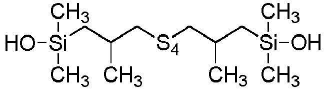

L'invention concerne également un procédé d'obtention d'un polysulfure de monohydroxysilane de formule (I), qui comporte les étapes suivantes :
- on conduit une hydrosilylation d'un alcène de formule R²-C(CH₂)Z-Hal (où Hal=halogène) par un hydrogénosilane de formule Hal(R¹)₂Si-H pour donner un organosilane halogéné (ci-après produit A) de formule :

   Hal-(R¹)₂Si-CH₂-(R²)CH-Z- Hal
- on conduit, dans un solvant organique inerte, une hydrolyse par action d'un donneur d'hydroxyles, sur le produit A en présence, d'une base organique ou minérale pour piéger l'halogénure d'acide formé, le donneur d'hydroxyles étant de l'eau, pour obtenir un monohydroxysilane (produit C) de formule :

   HO-(R¹)₂Si-CH₂-(R²)CH-Z-Hal
- on conduit finalement une étape de sulfuration sur le produit C, par action d'un polysulfure, pour aboutir au produit de formule (I) visé ;
avec R¹, R² et Z tels que définis précédemment.

### II. MESURES ET TESTS UTILISES

Les compositions de caoutchouc dans lesquelles sont testés les agents de couplage hydroxysilanes, sont caractérisées avant et après cuisson, comme indiqué ci-après.

### Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en Mpa) à 10% d'allongement (noté M10), 100% d'allongement (noté M100) et 300% d'allongement (noté M300). On mesure également les contraintes à la rupture (en Mpa) et les allongements à la rupture (en %). Toutes ces mesures de traction sont effectuées dans les conditions normales de température et d'hygrométrie selon la norme française NF T 40-101 (décembre 1979).

### II. DESCRITION DETAILLEE DE L'INVENTION

### Polysulfure de monohydroxysilane de l'invention.

Le premier objet de l'invention est un polysulfure monohydroxysilane, de formule (I):

(HO)(R¹)₂Si-CH₂-(R²)CH-Z-Sx-Z-HC(R²)-CH₂Si(R¹)₂(OH) (I)

soit sous forme semi-développée : 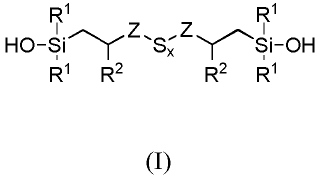 dans laquelle :
- R¹, identiques ou différents, représentent chacun un groupe hydrocarboné monovalent ayant de 1 à 18 atomes de carbone;
- R², identiques ou différents, représentent chacun un groupe hydrocarboné monovalent ayant de 1 à 4 atomes de carbone,
- Z, identiques ou différents, représentent chacun un groupe de liaison hydrocarboné divalent comportant de 1 à 16 atomes de carbone,
- x est un nombre entier ou fractionnaire supérieur ou égal à 2.

De préférence les groupes R¹ sont choisis parmi les alkyles en C₁-C₆, les cycloalkyles en C₅-C₈ et le radical phényle; les groupes Z étant choisis parmi les alkylènes en C₁-C₁₆ et les arylènes en C₆-C₁₂; et plus préférentiellement les groupes R¹ sont choisis parmi les alkyles en C₁-C₃ et les groupes Z étant choisis parmi les alkylènes en C₁-C₃.

Selon une variante de réalisation préférentielle de l'invention, le polysulfure répond à la formule (Me = méthyle) :

(HO)(Me)₂Si-CH₂-(Me)CH-Z-Sx-Z-HC(Me)-CH₂-Si(Me)₂(OH)

De préférence, les groupes Z sont choisis parmi méthylène et éthylène.

Encore plus préférentiellement le polysulfure consiste en un polysulfure de bis(2-methylpropane-1,3-diyl)(diméthylsilanol) de formule :

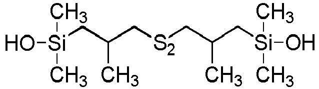

Les hydroxysilanes polysulfurés synthétisés sont en fait des mélanges de polysulfures (par exemple de x=2 à x=9), avec par conséquent une valeur moyenne pour x qui est différente d'une valeur entière. La valeur moyenne visée pour x est préférentiellement dans un domaine allant de 2 à 6, plus préférentiellement dans un domaine allant de 2 à 4.

### Procédé de synthèse

Le polysulfure de monohydroxysilane de formule (I) peut être obtenu par un procédé comportant les étapes suivantes:
- on conduite une hydrosilylation (schéma 1 ci-dessous) d'un alcène de formule H₂C=C(R²)-Z-Hal par un hydrogénosilane de formule générale Hal(R¹)₂Si-H (où Hal = halogène) pour conduire à un organosilane halogéné (ci-après produit A) de formule: 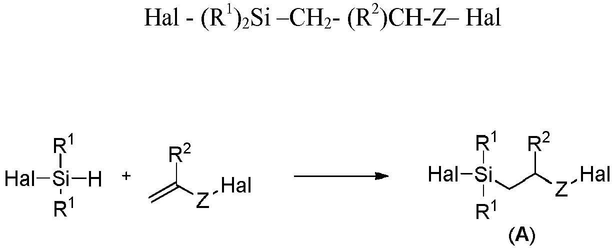 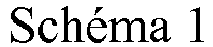 avec R¹, R² et Z tels que définis précédemment ;
- on conduit, dans un solvant organique inerte, une hydrolyse par action d'un donneur d'hydroxyles, sur le produit A en présence, d'une base organique ou minérale pour piéger l'halogénure d'acide formé, le donneur d'hydroxyles étant de l'eau (schéma 2), pour obtenir un monohydroxysilane (produit C) de formule : 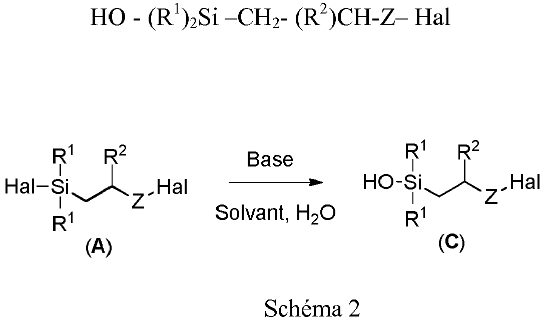 avec R¹, R² et Z tels que définis précédemment ;
- on conduit finalement une étape de sulfuration sur le produit C (schéma 3), par action d'un polysulfure, pour aboutir au produit de formule (I) visé ; 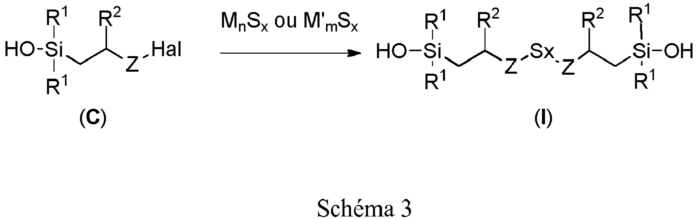 avec R¹, R², Z et x tels que définis précédemment.

Avantageusement, Hal est le chlore.

De préférence, la base organique destinée à piéger l'halogénure d'acide formé est une amine tertiaire.

Selon une variante de réalisation du procédé, le donneur d'hydroxyles est utilisé en excès par rapport à la quantité de produit A.

Avantageusement, le polysulfure est un polysulfure (x ≥ 2) d'ammonium ou métallique, de formule MₙSₓ ou M'Sₓ (M = métal alcalin ou NH₄ ; M' = Zn ou métal alcalino-terreux).

De préférence, il s'agit d'un polysulfure de sodium Na₂Sₓ, de préférence généré par action de soufre sur Na₂S.

Plus préférentiellement encore, l'étape de sulfuration est conduite en phase aqueuse ou dans un milieu biphasique eau/solvant organique, en présence d'un catalyseur de transfert de phase et d'un sel de formule M"Hal ou M"₂SO₄ (M" choisi parmi Li, Na et K; Hal choisi parmi F, Cl et Br).

### Utilisation à titre d'agent de couplage

Comme indiqué précédemment, le composé de l'invention, grâce à sa double fonctionnalité, trouve une application industrielle avantageuse comme agent de couplage, destiné par exemple à assurer la liaison ou adhésion entre une matrice polymérique réactive (notamment une matrice de caoutchouc) et toute matière à surface hydroxylée, notamment minérale (par exemple, une fibre de verre) ou métallique (par exemple, un fil en acier au carbone ou en acier inoxydable).

Sans que ceci soit limitatif, il peut être notamment utilisé pour le couplage de charges blanches ou inorganiques renforçantes et d'élastomères diéniques, par exemple dans des compositions de caoutchouc destinées à la fabrication de pneumatiques. Par "charge inorganique renforçante", on entend de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Pour une telle utilisation, l'élastomère diénique est alors de préférence choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) et les mélanges de ces élastomères.

Lorsque le polysulfure de monohydroxysilane de l'invention est destiné au couplage (charge inorganique/élastomère diénique) dans une composition de caoutchouc formant par exemple tout ou partie d'une bande de roulement de pneumatique tourisme, l'élastomère diénique est alors de préférence un SBR ou un coupage (mélange) de SBR et d'un autre élastomère diénique tel que BR, NR ou IR. Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse ("Tg" - mesurée selon norme ASTM D3418-82) comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est alors de préférence un élastomère isoprénique, c'est-à-dire un élastomère diénique choisi dans le groupe constitué par le caoutchouc naturel (NR), les polyisoprènes de synthèse (IR), les différents copolymères d'isoprène et les mélanges de ces élastomères ; il s'agit alors plus préférentiellement de caoutchouc naturel ou d'un polyisoprène de synthèse du type cis-1,4 ayant un taux (% molaire) de liaisons cis-1,4 supérieur à 90%, plus préférentiellement encore supérieur à 98%.

Les polysulfures de monohydroxysilane de l'invention se sont révélés suffisamment efficaces à eux seuls pour le couplage d'un élastomère diénique et d'une charge inorganique renforçante telle que la silice, utilisés à un taux préférentiel supérieur à 1 pce (parties en poids pour cent parties d'élastomère), plus préférentiellement compris entre 2 et 20 pce. Ils peuvent avantageusement constituer le seul agent de couplage présent dans des compositions de caoutchouc renforcées de charge inorganique et destinées à la fabrication de pneumatiques.

A titre de charge inorganique renforçante, on citera les charges minérales du type siliceuse, en particulier de la silice (SiO₂), ou du type alumineuse, en particulier de l'alumine (Al₂O₃) ou des (oxyde)hydroxydes d'aluminium, ou encore des oxydes de titane renforçants, tels que décrits dans les brevets ou demandes de brevet précités.

### III. EXEMPLES DE REALISATION DE L'INVENTION

Dans les exemples de réalisation qui suivent, l'invention est mise en œuvre avec un polysulfure de bis(2-methylpropane-1,3-diyl)(diméthylsilanol) de formule :

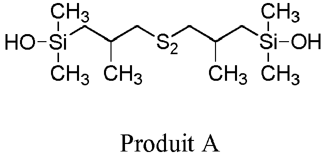

### Synthèse du disulfure de bis(2-methylpropane-1,3-diyl)(diméthylsilanol) (produit A)

### Etape 1

Dans un réacteur (2 litres) avec contrôle de température, agitation mécanique et condensation réfrigérée, l'heptane est introduit afin d'avoir le volume d'agitation. La température du milieu réactionnel est portée à 90°C. Une fois cette température atteinte, le catalyseur de Karsted est ajouté. Immédiatement après l'ajout du catalyseur, un pré-mélange de dimethylchlorosilane et de 3-chloro-2-methyl propène est ajouté au milieu réactionnel via une ampoule de coulée. La vitesse d'addition du pré-mélange est ajustée en fonction de l'exothermicité du milieu réactionnel et de reflux. L'objectif est de maintenir le reflux aussi bas que possible et la température de réaction entre 85 et 95°C.

Une fois l'addition terminée, le milieu réactionnel est agité pendant 30 minutes à 90°C (+/-5°C). L'heptane et les matières premières n'ayant pas réagi sont séparés par distillation.

Une distillation du brut réactionnel à 80°C sous une pression de 20 mm de mercure permet d'isoler le chloro(3-chloro-2-méthylpropyl)diméthylsilane avec un rendement de 97%. L'analyse RMN ne montre pas la présence de sous-produit.

### Etape 2

Le (3-chloro-2-méthylpropyl)diméthylsilanol est synthétisé par hydrolyse du chloro(3-chloro-2-méthylpropyl)diméthylsilane en présence de diméthyléthylamine. Deux protocoles expérimentaux peuvent être appliqués
- en utilisant l'éther comme solvant (75% massique de la quantité totale introduite) avec 6 moles d'eau et 5 moles de diméthyléthylamine pour une mole de chlorosilane,
- ou en utilisant le toluène comme solvant (45% massique de la quantité totale introduite) avec 3 moles d'eau et 2 moles de diméthyléthylamine pour une mole de chlorosilane.

Les deux protocoles sont réalisés à une température de 0°C. Le chlorosilane est ajouté goutte à goutte (durée totale d'addition environ 4 heures). Puis, la phase aqueuse est éliminée et la phase organique est concentrée sous pression réduite à 30°C.

Le (3-chloro-2-méthylpropyl)diméthylsilanol est obtenu avec un rendement quantitatif. La quantité de disiloxane, sous-produit résultatnt de la condensation du (3-chloro-2-méthylpropyl)diméthylsilanol est comprise entre 1 et 3 %mol par rapport au taux de silanol.

### Étape 3

A un mélange biphasique d'eau, de toluène, d'un agent de transfert de phase et de sels de polysulfures agité pendant 90 minutes entre 80 et 85°C, est ajoutée goutte à goutte du (3-chloro-2-méthylpropyl)diméthylsilanol en solution dans le toluène (environ 15%).
- Les sels de polysulfures sont pré-formés par réaction d'un mélange de soufre, de chlorure de sodium et de sulfure de sodium.

La distribution de soufre dans le produit final peut être modifiée en changeant la proportion de soufre vis-à-vis du silanol dans cette réaction. Les proportions utilisées ici sont 1,33 moles de soufre pour 1 mole silanol, afin d'obtenir une longueur moyenne de chaîne de x= 2 atomes de soufre (produit A).

On notera ici que pour réaliser la synthèse d'un tétrasulfure de bis(2-methylpropane-1,3-diyl)(diméthylsilanol) de formule : 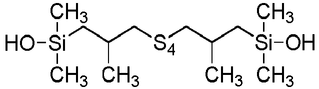 il suffit de modifier la quantité de soufre introduite.

La quantité de sulfure de sodium utilisée en ratios molaires par rapport au soufre peut donc varier de 5 à 0,5.

Le chlorure de sodium est ajouté dans des taux compris entre 2,3 et 4,3 moles de NaCl pour chaque mole de silanol.

L'agent de transfert de phase peut être un sel quaternaire ajouté juste avant de commencer l'ajout du silanol. On peut citer notamment comme sel quaternaire :
- le bromure de tétrabutyl ammonium (au minimum 3%mol),
- le chlorure de tétrabutyl ammonium (au minimum 1,6%mol),
- le chlorure de tetrabutylphosphonium (au minimum 1,6%mol),

Il est à noter que si ces quantités de catalyseurs de transfert de phase sont augmentées, alors la quantité de sous-produits asymétriques résultants de la réaction des groupements butyl provenant des catalyseurs, augmentera de manière désavantageuse.

Les proportions testées s'étendent de 0,8 à 5 % du poids de réactifs. La réaction a été suivie par la chromatographie gazeuse, et considérée comme terminée quand tout le silanol a été consommé.

La dilution du produit est comprise entre 10 et 15 % en toluène. La quantité de l'eau utilisée dans les sels est également dans cette plage de valeurs. La phase aqueuse est éliminée et le produit contenu dans la phase organique est concentré sous vide à une température inférieure à 35°C .

Les produits finaux sont caractérisés par RMN. Ceci montre la quantité de composés asymétriques formés (dérivés principalement de la réaction du silanol avec le catalyseur) et la quantité de sulfidosilanol polycondensés.

Le contenu des composés asymétriques peut être réduit en lavant le produit avec de l'hexane. Les composés asymétriques sont préférentiellement solubles dans l'hexane, mais une partie du produit est également soluble dans l'hexane, ce qui fait baisser le rendement de la réaction.

Ce produit est donc constitué d'une distribution de polysulfures dont la valeur moyenne des x est proche de 2.

### Synthèse du bis-(propyldiméthylsilanol), (produit B), de formule :

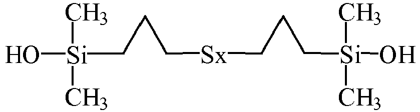

Ce produit est synthétisé conformément à la description du brevet EP 1 326 914, paragraphes [0108] à [0128].

### Utilisation comme agent de couplage

Cet essai a pour but de démontrer les performances améliorées d'une composition comprenant à titre d'agent de couplage un polysulfure de monohydroxysilane conforme à l'invention, comparée à une composition conventionnelle utilisant à titre d'agent de couplage du TESPT, ainsi qu'à une composition utilisant un agent de couplage conforme au document EP 1 326 914.

On prépare ainsi trois compositions à base de SBR, renforcées majoritairement de silice, qui se distinguent les unes des autres par la nature de leur agent de couplage, ces agents de couplage étant utilisés à un taux isomolaire en silicium, comme suit :
- la composition témoin C1 conventionnelle, non conforme à l'invention, comprend à titre d'agent de couplage du TESPT,
- la composition témoin C2, non conforme à l'invention, comprend à titre d'agent de couplage le produit B,
- la composition C3 conforme à l'invention comprend à titre d'agent de couplage le produit A.

Pour préparer ces trois compositions, on procède de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis les divers autres ingrédients à l'exception du système de vulcanisation. On conduit alors un travail thermomécanique (phase non-productive) en une ou deux étapes (durée totale du malaxage égale à environ 7 min), jusqu'à atteindre une température maximale de "tombée" d'environ 165°C. On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, par exemple comme produits semi-finis pour pneumatiques, en particulier comme bandes de roulement de pneumatiques.
On rappelle que le TESPT est le tétrasulfure de bis(3-triéthoxysilylpropyl), de formule [(C₂H₅O)₃Si(CH₂)₃S₂]₂ ; il est commercialisé par exemple par la société Evonik sous la dénomination "Si69" (ou "X50S" lorsqu'il est supporté à 50% en poids sur du noir de carbone), ou encore par la société Witco sous la dénomination "Silquest A1289" (dans les deux cas, mélange commercial de polysulfures Sₓ avec une valeur moyenne pour x qui est proche de 4).

La formule développée du TESPT est:

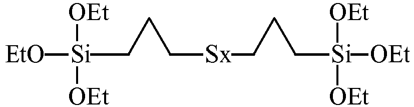

Les tableaux 1 et 2 donnent respectivement la formulation des trois compositions (taux des différents produits exprimés en pce), et leurs propriétés après cuisson (environ 30 min à 150°C).

Au vu du tableau 2, on constate de façon surprenante que la composition C3 comprenant l'agent de couplage conforme à l'invention présente de propriété de rigidité significativement améliorées par rapport aux deux compositions témoins C1 et C2 à toutes les déformations ainsi que des propriétés en contrainte à la rupture nettement améliorés par rapport à la composition témoin conventionnelle C1 et identique à la composition C2.

**Tableau 1**

| Compositions | C1 | C2 | C3 |
|---|---|---|---|
| SBR (1) | 100 | 100 | 100 |
| noir de carbone (2) | 4 | 4 | 4 |
| silice (3) | 110 | 110 | 110 |
| silane (4) | 8,8 | - | - |
| silane (5) | - | 6,5 | - |
| silane (6) | - | - | 7,1 |
| résine (7) | 45 | 45 | 45 |
| huile (8) | 17 | 17 | 17 |
| Cire | 1,8 | 1,8 | 1,8 |
| DPG (9) | 2 | 2 | 2 |
| ZnO | 1 | 1 | 1 |
| acide stéarique | 2 | 2 | 2 |
| antioxydant (10) | 2,7 | 2,7 | 2,7 |
| Soufre * | 1,1 | 1,1 | 1,8 |
| accélérateur (11) | 2,3 | 2,3 | 2,3 |

| | | | |
|---|---|---|---|
| (1) SBR avec 27% de motif styrène et 24% de motif 1,2 de la partie butadiénique (Tg =-48°C) porteur d'une fonction silanol en extrémité de chaine élastomère, et comportant minoritairement en poids, des chaines de même microstructure mais étoilées Sn ; (2) noir de carbone N234 commercialisé par la société Cabot Corporation (3) silice type "HD" - "Zeosil 1165MP" de la société Solvay ; (4) TESPT ("Si69" de la société EVONIK); (5) produit B (bis-(propyldiméthylsilanol) à 90%mol) ; (6) produit A (bis(2-methylpropane-1,3-diyl)(diméthylsilanol) à 77%mol; (7) résine coupe C5/C9 (« Resine THER 8644 » de la société Cray Valley) ; (8) huile de tournesol, Lubrirob TOD 1880 de la société Novance (9) diphénylguanidine ("Vulcacit D" de la société Bayer); (10) N-1,3-diméthylbutyl-N-phényl-para-phénylènediamine ("Santoflex 6-PPD" de la société Flexsys); (11) N-cyclohexyl-2-benzothiazyl-sulfénamide ("Santocure CBS" de la société Flexsys). * Les taux de soufre ont été ajustés pour prendre en compte le relargage du soufre qui a lieu avec le TESTP et le produit B (polysulfure S4) et pas avec le produit A (disulfure S2). | | | |

**Tableau 2**

| Compositions | C1 | C2 | C3 |
|---|---|---|---|
| M10 (MPa) | 4,0 | 4,2 | 4,6 |
| M100 (MPa) | 1,6 | 1,6 | 1,9 |
| M300 (MPa) | 2,8 | 2,6 | 3,0 |
| Contrainte rupture (MPa) | 20,2 | 21,2 | 21,2 |

## Revendications

1. Polysulfure de monohydroxysilane, de formule (1):
(HO)(R')₂Si-CH₂-(R²)CH-Z-Sx-Z-HC(R²)-CH₂-Si(R¹)₂(OH) (I)
dans laquelle :
- R¹, identiques ou différents, représentent chacun un groupe hydrocarboné monovalent ayant de 1 à 18 atomes de carbone;
- R², identiques ou différents, représentent chacun un groupe hydrocarboné monovalent ayant de 1 à 4 atomes de carbone,
- Z, identiques ou différents, représentent chacun un groupe de liaison hydrocarboné divalent comportant de 1 à 16 atomes de carbone,
- x est un nombre entier ou fractionnaire supérieur ou égal à 2.

2. Polysulfure selon la revendication 1, dans lequel les groupes R¹ sont choisis parmi les alkyles en C₁-C₆, les cycloalkyles en C₅-C₈ et le radical phényle; les groupes Z étant choisis parmi les alkylènes en C₁-C₁₆ et les arylènes en C₆-C₁₂.

3. Polysulfure selon la revendication 2, dans lequel les groupes R¹ sont choisis parmi les alkyles en C₁-C₃ et les groupes Z étant choisis parmi les alkylènes en C₁-C₃.

4. Polysulfure selon la revendication 3, qui répond à la formule (Me = méthyle) :
(HO)(Me)₂Si-CH₂-(Me)CH-Z-Sx-Z-HC(Me)-CH₂-Si(Me)₂(OH)

5. Polysulfure selon l'une quelconque des revendications 3 ou 4, dans lequel les groupes Z sont choisis parmi méthylène et éthylène.

6. Polysulfure selon la revendication 5, consistant en un polysulfure de bis(2-methylpropane-1,3-diyl)(diméthylsilanol) de formule :

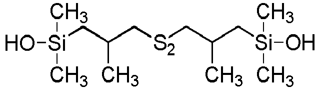

7. Polysulfure selon la revendication 5, consistant en un polysulfure de bis(2-methylpropane-1,3-diyl)(diméthylsilanol) de formule :

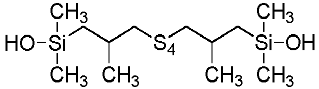

8. Polysulfure selon l'une quelconque des revendications 1 à 5, dans lequel x est compris dans un domaine allant de 2 à 4.

9. Procédé d'obtention d'un polysulfure de monohydroxysilane de formule (I) selon l'une quelconque des revendications 1 à 8, qui comporte les étapes suivantes:
• on conduit une hydrosilylation d'un alcène de formule H₂C=C(R²)-Z-Hal (où Hal=halogène) par un hydrogénosilane de formule Hal(R¹)₂Si-H pour donner un organosilane halogéné (ci-après produit A) de formule:
Hal-(R¹)₂Si-CH₂-(R²)CH-Z-Hal
• on conduit, dans un solvant organique inerte, une hydrolyse par action d'un donneur d'hydroxyles, sur le produit A en présence, d'une base organique ou minérale pour piéger l'halogénure d'acide formé, le donneur d'hydroxyles étant de l'eau, pour obtenir un monohydroxysilane (produit C) de formule :
HO-(R¹)₂Si-CH₂-(R²)CH-Z-Hal
• on conduit finalement une étape de sulfuration sur le produit C, par action d'un polysulfure, pour aboutir au produit de formule (I) visé.

10. Procédé selon la revendication 9, dans lequel Hal étant le chlore.

11. Procédé selon l'une quelconque des revendications 9 ou 10, dans lequel la base organique destinée à piéger l'halogénure d'acide formé étant une amine tertiaire.

12. Procédé selon l'une quelconque des revendications 9 à 11, dans lequel le donneur d'hydroxyles étant utilisé en excès par rapport à la quantité de produit A.

13. Procédé selon l'une quelconque des revendications 9 à 12, dans lequel le polysulfure étant un polysulfure (x ≥ 2) d'ammonium ou métallique, de formule M₂Sₓ ou M'Sₓ avec M = métal alcalin ou NH₄ et M' = Zn ou métal alcalino-terreux.

14. Procédé selon la revendication 13, le polysulfure étant un polysulfure de sodium Na₂Sₓ, de préférence généré par action de soufre sur Na₂S.

15. Procédé selon les revendications 13 ou 14, dans lequel l'étape de sulfuration étant conduite en phase aqueuse ou dans un milieu biphasique eau/solvant organique, en présence d'un catalyseur de transfert de phase et d'un sel de formule M"Hal ou M"₂SO₄ avec M" choisi parmi Li, Na et K et Hal choisi parmi F, Cl et Br.

## Patentansprüche

1. Monohydroxysilanpolysulfid der Formel (I):
(HO)(R¹)₂Si-CH₂-(R²)CH-Z-Sx-Z-HC(R²)-CH₂-Si(R¹)₂(OH) (I)
worin:
- die Gruppen R¹ gleich oder verschieden sind und jeweils für eine einwertige Kohlenwasserstoffgruppe mit 1 bis 18 Kohlenstoffatomen stehen;
- die Gruppen R² gleich oder verschieden sind und jeweils für eine einwertige Kohlenwasserstoffgruppe mit 1 bis 4 Kohlenstoffatomen stehen;
- die Gruppen Z gleich oder verschieden sind und jeweils für eine zweiwertige Kohlenwasserstoff-Verknüpfungsgruppe mit 1 bis 16 Kohlenstoffatomen stehen,
- x für eine ganze oder gebrochene Zahl größer oder gleich 2 steht.

2. Polysulfid nach Anspruch 1, wobei die Gruppen R¹ aus C₁-C₆-Alkylgruppen, C₅-C₈-Cycloalkylgruppen und dem Phenylrest ausgewählt sind; wobei die Gruppen Z aus C₁-C₁₆-Alkylengruppen und C₆-C₁₂-Arylengruppen ausgewählt sind.

3. Polysulfid nach Anspruch 2, wobei die Gruppen R¹ aus C₁-C₃-Alkylgruppen ausgewählt sind und wobei die Gruppen Z aus C₁-C₃-Alkylengruppen ausgewählt sind.

4. Polysulfid nach Anspruch 3, das der folgenden Formel entspricht (Me = Methyl):
(HO)(Me)₂Si-CH₂-(Me)CH-Z-Sx-Z-HC(Me)-CH₂-Si(Me)₂(OH)

5. Polysulfid nach Anspruch 3 oder 4, wobei die Gruppen Z aus Methylen und Ethylen ausgewählt sind.

6. Polysulfid nach Anspruch 5, bestehend aus einem Bis(2-methylpropan-1,3-diyl) (dimethylsilanol)polysulfid der Formel:

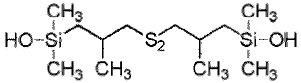

7. Polysulfid nach Anspruch 5, bestehend aus einem Bis(2-methylpropan-1,3-diyl)(dimethylsilanol)polysulfid der Formel:

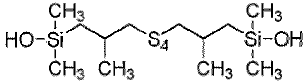

8. Polysulfid nach einem der Ansprüche 1 bis 5, wobei x im Bereich von 2 bis 4 liegt.

9. Verfahren zum Erhalt eines Monohydroxysilanpolysulfids der Formel (I) nach einem der Ansprüche 1 bis 8, das folgende Schritte umfasst:
• man führt eine Hydrosilylierung eines Alkens der Formel H₂C=C(R²)-Z-Hal (wobei Hal = Halogen) mit einem Hydrogensilan der Formel Hal(R¹)₂Si-H durch, wobei man ein Halogenorganosilan (nachstehend Produkt A) der Formel:
Hal-(R¹)₂Si-CH₂-(R²)CH-Z-Hal
erhält;
• man führt in einem inerten organischen Lösungsmittel eine Hydrolyse durch Einwirkung eines Hydroxylgruppendonators auf das Produkt A in Gegenwart einer organischen oder anorganischen Base zum Abfangen des gebildeten Säurehalogenids durch, wobei es sich bei dem Hydroxylgruppendonator um Wasser handelt, wobei man ein Monohydroxysilan (Produkt C) der Formel:
HO-(R¹)₂Si-CH₂-(R²)CH-Z-Hal
erhält;
• man führt schließlich an dem Produkt C einen Schritt der Sulfidierung durch Einwirkung eines Polysulfids durch, wobei man das Zielprodukt der Formel (I) erhält.

10. Verfahren nach Anspruch 9, wobei Hal für Chlor steht.

11. Verfahren nach Anspruch 9 oder 10, wobei es sich bei der organischen Base zum Abfangen des gebildeten Säurehalogenids um ein tertiäres Amin handelt.

12. Verfahren nach einem der Ansprüche 9 bis 11, wobei der Hydroxylgruppendonator im Überschuss gegenüber der Menge von Produkt A verwendet wird.

13. Verfahren nach einem der Ansprüche 9 bis 12, wobei es sich bei dem Polysulfid um ein Ammonium- oder Metallpolysulfid (x ≥ 2) der Formel M₂Sₓ oder M'Sₓ mit M = Alkalimetall oder NH₄ und M' = Zn oder Erdalkalimetall handelt.

14. Verfahren nach Anspruch 13, wobei es sich bei dem Polysulfid um ein vorzugsweise durch Einwirkung von Schwefel auf Na₂S gebildetes Natriumpolysulfid Na₂Sₓ handelt.

15. Verfahren nach Anspruch 13 oder 14, wobei der Sulfidierungsschritt in wässriger Phase oder in einem zweiphasigen Medium aus Wasser und organischem Lösungsmittel in Gegenwart eines Phasentransferkatalysators und eines Salzes der Formel M"Hal oder M"₂SO₄, wobei M" aus Li, Na und K ausgewählt wird und Hal aus F, Cl und Br ausgewählt wird, durchgeführt wird.

## Claims

1. A monohydroxysilane polysulfide, of formula (I):
(HO)(R¹)₂Si-CH₂-(R²)CH-Z-Sₓ-Z-HC(R²) -CH₂-Si(R¹)₂(OH) (I),
in which:
each R¹ represent a monovalent hydrocarbon group having from 1 to 18 carbon atoms and can be the same or different from one another,
each R² represents a monovalent hydrocarbon group having from 1 to 4 carbon atoms and can be the same or different from one another,
each Z represents a divalent hydrocarbon bonding group comprising from 1 to 16 carbon atoms and can be the same or different from one another, and
x is an integral or fractional number greater than or equal to 2.

2. Polysulfide according to claim 1, wherein R¹ groups are selected from the group consisting of C₁-C₆ alkyls, C₅-C₈ cycloalkyls and the phenyl radical, the groups Z are selected from the group consisting of C₁-C₁₆ alkylenes and C₆-C₁₂ arylenes.

3. Polysulfide according to claim 2, wherein R¹ groups are selected from the group consisting of C₁-C₃ alkyls, and the groups Z are selected from the group consisting of C₁-C₃ alkylenes.

4. Polysulfide according to claim 3, wherein the monohydroxysilane polysulfide corresponds to the following, where Me is methyl:
(HO)(Me)₂Si-CH₂-(Me)CH-Z-Sx-Z-HC(Me)-CH₂-Si(Me)₂(OH).

5. Polysulfide according to any one of claim 3 or 4, wherein the groups Z are chosen from methylene or ethylene.

6. Polysulfide according to claim 5, wherein the coupling agent consists of a bis(2-methylpropane-1,3-diyl)(dimethylsilanol) polysulfide of formula

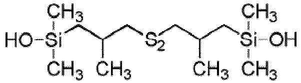

7. Polysulfide according to claim 5, wherein the coupling agent consists of a bis(2-methylpropane-1,3-diyl)(dimethylsilanol) polysulfide of formula

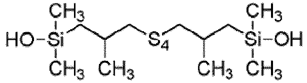

8. Polysulfide according to any one of claims 1 to 5, wherein x is within a range extending from 2 to 4.

9. Process for obtaining a monohydroxysilane polysulphide of formula (I) according to any one of Claims 1 to 8, which comprises the following stages
• a hydrosilylation of an alkene of formula H₂C=C(R²)-Z-Hal (wherein Hal = halogen) by a hydrogenosilane of formula Hal(R¹)₂Si-H is carried out in order to result in a halogenated organosilane (hereinafter product A) of formula
Hal-(R¹)₂Si-CH₂-(R²)CH-Z-Hal
• a hydrolysis is carried out, in an inert organic solvent, by the action of a hydroxyl donor, on the product A, in the presence of an organic or inorganic base, in order to trap the acid halide formed, the hydroxyl donor being water, in order to obtain a monohydroxysilane (product C) of formula
HO-(R¹)₂Si-CH₂-(R²)CH-Z-Hal
• a sulfidation step is carried out on product C, by the action of a polysulphide, in order to result in the targeted product of formula (I).

10. The process according to claim 9, wherein Hal is chlorine.

11. The process according to any one of claim 9 or 10, wherein the organic base intended to trap the acid halide formed is a tertiary amine.

12. The Process according to any one of claims 9 to 11, in which the hydroxyl donor is used in excess with respect to the amount of product A.

13. The process according to any one of claims 9 to 12, in which the polysulphide is an ammonium or metal polysulfide (x> 2), of formula M₂S_{X} or M'S_{X} with M = alkali metal or NH₄ and M'= Zn or alkaline earth metal.

14. The process according to claim 13, the polysulfide is a sodium polysulfide Na₂Sₓ, preferably generated by the action of sulfur on Na₂S.

15. The process according to claims 13 or 14, wherein the sulfidation step is carried out in the aqueous phase or in a two-phase water / organic solvent medium, in the presence of a phase transfer catalyst and of a salt of formula M"Hal or M"₂SO₄ with M "chosen from Li, Na and K and Hal chosen from F, Cl and Br.
